# EUROPÄISCHE PATENTSCHRIFT

(11) **EP 3 221 613 B1**
(45) Veröffentlichungstag und Bekanntmachung des Hinweises auf die Patenterteilung: **27.05.2020**
(21) Anmeldenummer: 15770897.5
(22) Anmeldetag: 29.09.2015
(51) Int. Cl.: F16F 13/10, F16F 13/26

(54) **HYDROLAGER SOWIE KRAFTFAHRZEUG MIT EINEM DERARTIGEN HYDROLAGER**
HYDRAULIC MOUNT AND MOTOR VEHICLE COMPRISING A HYDRAULIC MOUNT OF THIS TYPE
PALIER HYDRAULIQUE ET VÉHICULE À MOTEUR ÉQUIPÉ D'UN TEL PALIER HYDRAULIQUE

(30) Priorität: 17.11.2014 DE 102014223403
(43) Veröffentlichungstag der Anmeldung: 27.09.2017
(73) Patentinhaber: ContiTech Vibration Control GmbH, 30165 Hannover (DE)
(72) Erfinder: WERHAHN, Max, 30449 Hannover (DE); GENDERJAHN, Robert, 30625 Hannover (DE)
(74) Vertreter: Preusser, Andrea
(86) Internationale Anmeldenummer: PCT/EP2015/072304
(87) Internationale Veröffentlichungsnummer: WO 2016/078808

(56) Entgegenhaltungen:
- JP-A- 2009 092 237
- JP-A- 2011 149 493
- US-A1- 2004 188 904
- US-A1- 2005 127 585
- US-A1- 2012 242 019

## Beschreibung

Die Erfindung betrifft ein Hydrolager mit einer Tragfeder, einer von der Tragfeder zumindest teilweise umfassten Arbeitskammer, die mit einer Hydraulikflüssigkeit gefüllt ist, einer Ausgleichskammer, und einem zwischen der Arbeitskammer und der Ausgleichskammer ausgebildeten Drosselkanal zum Austausch von Hydraulikflüssigkeit.

Außerdem betrifft die Erfindung ein Kraftfahrzeug, das einen Fahrzeugrahmen, einen Motor und ein als Hydrolager ausgebildetes Motorlager umfasst, das eine lagernde Verbindung zwischen dem Motor und dem Fahrzeugrahmen herstellt.

Hydrolager, die auch als Hydrauliklager bezeichnet werden, sind aus dem Stand der Technik bekannt. Sie dienen zur elastischen Abstützung von Aggregaten, insbesondere von Kraftfahrzeugmotoren. Mit Hilfe derartiger, sich z. B. zwischen einem Motor und einem Chassis des Kraftfahrzeugs befindenden Hydrolagern soll verhindert werden, dass Vibrationen des Motors auf das Chassis übertragen werden, da die Vibrationen von einem Fahrgast des Kraftfahrzeugs oftmals als unangenehme Geräusche wahrgenommen werden.

Dabei ist der bekannte Konflikt in der Schwingungsisolation zu beachten, der darin besteht, dass das Hydrolager einerseits möglichst steif sein soll, um hohe Lasten bzw. Lagerkräfte aufnehmen zu können, und andererseits eine weiche Charakteristik aufweisen muss, um entstehende Schwingungen über einen möglichst breiten Frequenzbereich zu isolieren.

In ihrer Grundversion weisen derartige Hydrauliklager üblicherweise ein Gummielement als Tragfeder, die auch als Tragkörper bezeichnet wird, in Verbindung mit einem hydraulischen Dämpfer auf. Das Gummielement ist oft als Hohl-Konus ausgebildet. Die Tragfeder kann somit eine Mantelwandung der Arbeitskammer bilden. An der oberen, spitzen Stirnseite des Hohl-Konuses ist zumeist eine obere Abdeckung vorgesehen, an der ein Anschlusselement zur Befestigung des Motors angebracht ist. Das Anschlusselement ist für gewöhnlich ein Gewindebolzen, der mit dem Motor verschraubt werden kann. Dabei umfasst der hydraulische Dämpfer zumeist mindestens zwei Kammern, nämlich die Arbeitskammer und die Ausgleichskammer. In Längsrichtung des Hydrolagers ist die Ausgleichskammer für gewöhnlich unterhalb der Arbeitskammer angeordnet. Um die Arbeiterkammer und die Ausgleichskammer voneinander zu trennen, kann zwischen der Ausgleichskammer und der Arbeitskammer eine Trennwand angeordnet sein. Außerdem ist ein sich zwischen der Arbeitskammer und der Ausgleichkammer erstreckender Drosselkanal zum Austausch von Hydraulikflüssigkeit vorgesehen. Mittels des Drosselkanals entsteht deshalb eine hydraulische Kopplung zwischen der Arbeitskammer und der Ausgleichskammer. Vorzugsweise ist der Drosselkanal zumindest abschnittsweise von der Trennwand ausgebildet. Alternativ kann der Drosselkanal auch von der Trennwand getrennt ausgebildet sein. Vorzugsweise sind auch die Ausgleichskammer zumindest teilweise und der Drosselkanal mit Hydraulikflüssigkeit gefüllt. Als Hydraulikflüssigkeit wird vorzugsweise ein Gemisch aus Öl und Wasser oder ein Fluid mit Glykol eingesetzt.

Bei einer Belastung des Hydrolagers wirkt eine Kraft in Längsrichtung des Hydrolagers auf die Tragfeder, so dass sich diese elastisch verformt. Diese Verformung wird auch als Einfedern der Tragfeder bezeichnet. Die Arbeitskammer ist von der Tragfeder zumindest teilweise umfasst, so dass die Arbeitskammer durch das Einfedern der Tragfeder verkleinert wird. Damit steigt der Druck in der Arbeitskammer an, woraufhin ein Teil der Hydraulikflüssigkeit aus der Arbeitskammer durch den Drosselkanal in die Ausgleichskammer strömt. Für die strömende Hydraulikflüssigkeit stellt der Drosselkanal einen Strömungswiderstand dar. Das Durchströmen des entsprechend ausgebildeten Drosselkanals erzeugt deshalb Dissipation und somit Dämpfungsarbeit.

Die Ausgleichskammer ist bevorzugt mit mindestens einem membranartig verformbaren Wandungsteil, insbesondere einer Rollmembran, versehen, so dass der in die Ausgleichskammer einströmende Teil der Hydraulikflüssigkeit aufgenommen werden kann.

Ein derartiges Hydrolager ist beispielsweise aus dem Dokument DE 693 00 371 T2 bekannt.

Die Dämpfungseigenschaften solcher Hydrolager sind aufgrund ihrer Bauweise frequenzabhängig. Statische oder quasistatische Belastungen unterhalb einer Frequenz von 5 Hz werden üblicherweise von der Tragfeder aufgenommen, die eine relativ große Steifigkeit aufweist.

Niederfrequente Schwingungen, d.h. Schwingungen mit Frequenzen von ca. 5 bis 20 Hz, die im Allgemeinen mit großen Amplituden auftreten, werden durch das Zusammenwirken der Arbeitskammer und der Ausgleichskammer über den Drosselkanal gedämpft. Die Dämpfung entsteht mit dem Strömen von zumindest eines Teils der Hydraulikflüssigkeit aus der Arbeitskammer durch den Drosselkanal in die Ausgleichskammer, und umgekehrt, wobei eine entsprechende Dämpfungsarbeit geleistet wird.

Hochfrequente Schwingungen, also Schwingungen im Frequenzbereich von 20 Hz bis beispielsweise 50 Hz, 100 Hz, 200 Hz, oder mehr werden aufgrund der Trägheit, Viskosität und Inkompressibilität der Hydraulikflüssigkeit und/oder der hohen Steifigkeit und Trägheit der Tragfeder nur sehr gering gedämpft oder sogar nahezu ungedämpft übertragen. Diese Schwingungen treten zwar im Allgemeinen nur mit kleinen Amplituden auf, sind aber aufgrund ihrer akustischen Wirkung von höherer Bedeutung.

Zur besseren Isolation solcher Schwingungen kann die Trennwand zwischen der Arbeitskammer und der Ausgleichskammer teilweise flexibel oder mit einem Freiweg ausgebildet werden. Eine solche Lösung wird jedoch vielen Isolierungsanforderungen, insbesondere hinsichtlich der stetig steigenden Komfortanforderungen bei Kraftfahrzeugen, nicht gerecht. Denn eine erhöhte Nachgiebigkeit der Trennwand verringert die dynamische Steifigkeit des Hydrolagers auch bei niedrigen Frequenzen. Dies kann eine verringerte Dämpfung für den entsprechenden Frequenzbereich zur Folge haben. Es wird auch von einem so genannten Dämpfungsverlust gesprochen.

Im Hinblick auf ein verbessertes Isolieren der hochfrequenten Schwingungen werden oftmals sogenannte aktiv gesteuerte Hydrolager eingesetzt, die jeweils einen Aktor, der auch als Aktuator bezeichnet wird, aufweisen. Bezüglich einer grundlegenden Wirkungsweise eines Aktors wird auf die Druckschrift DE 198 39 464 C2 verwiesen.

Für ein aus dem Stand der Technik bekanntes Hydrolager ist ein Anker des Aktors mechanisch mit einer Steuermembran verbunden, die vorzugsweise der Trennwand zugeordnet ist. Somit ist die Steuermembran zur Veränderung des Arbeitskammervolumens ausgebildet. Die Steuermembran kann dabei durch einen flexiblen Teil der Trennwand gebildet sein. Es ist aber auch möglich, dass die Steuermembran in einer Öffnung der Trennwand stoffschlüsssig befestigt ist, wobei der Randbereich der Trennwand elastisch ausgebildet ist, um mit der restlichen Steuermembran eine Hubbewegung ausführen zu können. Die Steuermembran kann also in ihrer Normalenrichtung elastisch verformt werden. Indem der Anker mechanisch an die Steuermembran gekoppelt ist, kann die Steuermembran mit dem Aktor in ihrer Normalenrichtung gesteuert verformt werden.

Mit dem elastischen Verformen der Steuermembran in ihrer Normalenrichtung verändern sich das Hydraulikvolumen der Arbeitskammer und/oder der Druck in der Arbeitskammer. Dies gilt insbesondere dann, wenn die Steuermembran einen Teil der Trennwand zu der Arbeitskammer bildet. Deshalb dient der Aktor auch zur Steuerung des Hydraulikvolumens der Arbeitskammer und/oder des Drucks der Arbeitskammer.

Wird das Hydrolager zur Lagerung eines Motors eines Kraftfahrzeuges eingesetzt, so können Sensoren des Kraftfahrzeugs eingesetzt werden, um die vom Motor ausgehenden Schwingungen in einem möglichst nur sehr gedämpften Maß an einen Innenraum zu übertragen oder die Schwingungen des Motors sogar vollständig zu entkoppeln. Hierzu kann beispielsweise ein Sensor vorgesehen sein, der Schwingungen des Motors oder des Chassis messen kann. Alternativ können auch mehrere Sensoren an unterschiedlichen Orten des Motors und/oder des Chassis vorgesehen sein.

Werden von dem Sensor zur Messung der Schwingungen des Chassis hochfrequente Schwingungen erfasst, kann die Steuermembran von dem Aktor synchron ausgelenkt werden. Die Richtung der Auslenkung kann dabei durch die Bauart des Hydrolagers bestimmt sein. Die Schwingungen des Motors verursachen entsprechende hochfrequente Druckschwankungen in der Hydraulikflüssigkeit der Arbeitskammer. Mit der synchronen Auslenkung der Steuermembran werden diese hochfrequenten Druckschwankungen möglichst vollständig ausgeglichen. Bestenfalls kommt es somit zu einer Kompensation, so dass diese hochfrequenten Schwingungen nicht von dem Hydrolager übertragen werden. Entsprechend hochfrequente Schwingungen verursachen deshalb im Innenraum des Kraftfahrzeugs keine oder nur sehr geringe Geräuschemissionen.

Durch die erläuterte Ansteuerung des Aktors und des entsprechenden Einwirkens auf die Steuermembran soll also eine Absenkung der dynamischen Federrate im Bereich der hochfrequenten Schwingungen bewirkt werden. Mit anderen Worten soll das Hydrolager für hochfrequente Schwingungen "weich" geschaltet werden. Bei niederfrequenten Schwingungen oder quasistatischen Belastungen des Hydrolagers wird die Steuermembran nicht aktiv angesteuert. Erhöht sich nun der Druck in der Arbeitskammer, kann die Steuermembran nachgeben, in dem sie durch die Hydraulikflüssigkeit aus der Arbeitskammer ausgelenkt wird. Im passiven Betrieb gibt die Steuermembran einem Druck aus der Arbeitskammer also nach. Aufgrund der Nachgiebigkeit der Steuermembran und ihrer hydraulischen Verbindung zu der Arbeitskammer verringert die Steuermembran die dynamische Steifigkeit des Hydrolagers. Für niederfrequente Schwingungen und/oder quasistatische Belastungen verschlechtert die Steuermembran die gewünschte Dämpfung aufgrund ihrer geringen Steifigkeit, und zwar zumindest im Randbereich. Es wird auch von einem sogenannten Dämpfungsverlust gesprochen. Teilweise wurden Versuche unternommen, diesen Dämpfungsverlust auszugleichen, indem die Steifigkeit insbesondere im Randbereich der Steuermembran erhöht wurde. Dies hat jedoch einen negativen Einfluss auf das Isolationsverhalten im höherfrequenten Bereich, insbesondere zwischen 20 Hz und 200 Hz. Außerdem vergrößert sich der für das Hydrolager notwendige Bauraum, wenn die Steifigkeit der Steuermembran erhöht werden sollte, da der Aktor entsprechend größer dimensioniert werden muss, um die entsprechend größeren Kräfte für die steifere Steuermembran zu überwinden.

Die US 2005 127 585 A1 beschreibt eine Reihenmotorhalterung, die in einer wahlweise kombinierten Anordnung mit einem Halterungskörper versehen ist. Die Reihenmotorhalterung weist einen fluidgefüllten Montagekörper mit einem elastischen Körper auf, der ein erstes und ein zweites Montageelement verbindet. Die Reihenmotorhalterung weist ferner eine Druckaufnahmekammer, die durch den elastischen Körper definiert ist, eine Gleichgewichtskammer, die durch eine flexible Schicht definiert ist, einen ersten Öffnungskanal, der die Druckaufnahme- und Gleichgewichtskammern verbindet, eine mediale Kammer, eine zweite Öffnung, die die mediale und die Gleichgewichtskammer verbindet, ein Druckschwankungsübertragungsmechanismus, eine druckregulierende Gummiplatte, eine Luftkammer und eine Luftpassage auf, die mit der Luftkammer mit einem Anschluss verbunden ist. Der Anschluss ist zu einer Atmosphäre offen, um die Luftkammer der Atmosphäre auszusetzen. Der Anschluss ist über ein statisches Druckschaltventil wahlweise mit Atmosphäre und Vakuum verbunden. Der Anschluss wird zyklisch zwischen der Verbindung mit der Atmosphäre und dem Vakuum über ein dynamisches Druckschaltventil umgeschaltet.

Der Erfindung liegt deshalb die Aufgabe zu Grunde, ein Hydrolager bereitzustellen, bei dem die genannten Nachteile verhindert oder verringert werden. Vorzugsweise sollte das Hydrolager dazu ausgebildet sein, bei einer üblichen Verwendung im niederfrequenten Schwingungsbereich eine möglichst gute Dämpfung sowie im höherfrequenten Schwingungsbereich eine möglichst gute Isolation zu bieten. Dabei ist es weiter bevorzugt, dass das Hydrolager eine möglichst kompakte Bauform aufweist. Die Aufgabe wird durch ein Hydrolager nach Anspruch 1 gelöst.

Gemäß des Oberbegriffs des erfindungsgemäßen Hydrolagers ist vorgesehen ein Hydrolager mit einer Tragfeder, einer von der Tragfeder zumindest teilweise umfassten Arbeitskammer, die mit einer Hydraulikflüssigkeit gefüllt ist, einer Ausgleichskammer, und einem zwischen der Arbeitskammer und der Ausgleichskammer ausgebildeten Drosselkanal zum Austausch von Hydraulikflüssigkeit, wobei das Hydrolager weiter aufweist: eine Zwischenkammer, eine erste, bewegbare Steuereinheit, die zwischen der Arbeitskammer und der Zwischenkammer angeordnet ist und diese beiden Kammern voneinander trennt, und eine zweite bewegbare Steuereinheit, die einen Wandungsabschnitt der Zwischenkammer bildet.

Diesen Merkmalen des Oberbegriffs liegt dabei der Gedanke zu Grunde, den Einfluss der genannten Nachgiebigkeit der Steuermembran auf die dynamische Steifigkeit des Hydrolagers bei niederfrequenten Schwingungen zu überwinden, ohne den Bauraum des Hydrolagers deutlich zu vergrößern. Eine Veränderung der Steifigkeit der Steuermembran führt jedoch nicht zu dem gewünschten Ergebnis. Denn die Steuermembran ist zumeist stoffschlüssig mit der Trennwand oder einem anderen Teil des Hydrolagers verbunden. Um das Volumen der Arbeitskammer zu verändern, ist eine elastische Verformung der Steuermembran notwendig. Die Vergrößerung der Steifigkeit der Steuermembran führt also zu einer deutlichen Vergrößerung des Aktors bei einer sonst vergleichbaren Auslenkung der Steuermembran mit einer gewünschten Amplitude und Frequenz. Die Vergrößerung des Aktors führt sodann zu einer spürbaren Vergrößerung des Bauraums des Hydrolagers, was zu vermeiden ist.

Es wird deshalb von einer Vergrößerung der Steifigkeit der Steuermembran, insbesondere in dem zugehörigen Randbereich, abgesehen. Anstatt dessen werden zwei in Reihe hintereinander angeordnete, mittels einer Zwischenkammer gekoppelte Steuereinheiten vorgesehen. Die Zwischenkammer kann mit einem inkompressiblen Medium, wie beispielsweise einer Hydraulikflüssigkeit, oder einem kompressiblen Medium, wie beispielsweise Luft, gefüllt sein. Zusätzlich zu der Arbeitskammer und der Ausgleichskammer umfasst das Hydrolager also die Zwischenkammer. Die Zwischenkammer kann sich von der ersten Steuereinheit bis zu der zweiten Steuereinheit erstrecken. Die beiden Steuereinheiten sind deshalb mittels der Zwischenkammer pneumatisch und/oder hydraulisch gekoppelt.

Die beiden Steuereinheiten können unterschiedlich ausgestaltet sein. Dies kann insbesondere ihr jeweiliges Übertragungsverhalten betreffen. Durch ihre unterschiedliche Ausgestaltung ist es mit den beiden Steuereinheiten möglich, dass niederfrequente Schwingungen der Hydraulikflüssigkeit der Arbeitskammer, welche zumeist mit großen Amplituden auftreten, nicht bis zu der zweiten Steuereinheit vordringen. Vielmehr kann die erste Steuereinheit derart ausgestaltet sein, dass niederfrequente Schwingungen mit großen Amplituden von der ersten Steuereinheit zumindest im Wesentlichen gesperrt werden.

Treten nun niederfrequente Schwingungen mit großen Amplituden auf, verursacht die erste Steuereinheit keinen Dämpfungsverlust. Denn die erste Steuereinheit lässt bei derartigen Schwingungen zumindest im Wesentlichen keine Wechselwirkung mit nachgeordneten Teilen des Hydrolagers, also beispielsweise der zweiten Steuereinheit, zu. Mit anderen Worten bleibt die Blähsteifigkeit bei derartigen Schwingungen erhalten. Mit dem Auftreten dieser niederfrequenten, großamplitudigen Schwingungen wird deshalb hauptsächlich der bereits erläuterte Volumenstrom an Hydraulikflüssigkeit durch den Drosselkanal verursacht, was eine effektive Dämpfung der Schwingungen bewirkt.

Treten hingegen hochfrequente Schwingungen mit kleinen Amplituden auf, wurde bereits erläutert, dass diese Schwingungen den Drosselkanal zumeist nicht passieren. Der Drosselkanal kann also für diese Schwingungen einen Sperrcharakter aufweisen. Dies gilt jedoch nicht notwendigerweise für die erste Steuereinheit. Denn diese kann einen Durchlasscharakter für derartige Schwingungen aufweisen, was eine Übertragung dieser Schwingungen von der Arbeitskammer an die Zwischenkammer und sodann an die zweite Steuereinheit erlaubt. Die zweite Steuereinheit kann zur Isolation derartiger Schwingungen ausgestaltet sein. So kann die zweite Steuereinheit beispielsweise durch eine eingangs erläuterte Steuermembran ausgestaltet sein. Sollte die zweite Steuereinheit, insbesondere sofern sie gemäß einer Steuermembran ausgestaltet ist, eine geringe Steifigkeit bzw. Biegesteifigkeit aufweisen, so ist dies nicht nachteilig für die das Dämpfungsverhalten von niederfrequenten Schwingungen. Denn diese werden von der ersten Steuereinheit zumindest im Wesentlichen gesperrt, so dass sie nicht auf die zweite, "weiche" Steuereinheit treffen. Für die gewünschte Isolation von hochfrequenten Schwingungen mit kleinen Amplituden kann die geringe Steifigkeit bzw. Biegesteifigkeit der zweiten Steuereinheit von Vorteil sein, was sich in der Praxis bewiesen hat. Somit kann eine Entkopplung der Funktion des Drosselkanals und der Isolationsfunktion der zweiten Steuereinheit gewährleistet werden. Beide Funktionen können deshalb unabhängig optimiert werden.

Eine bevorzugte Ausgestaltung des Hydrolagers zeichnet sich dadurch aus, dass die erste Steuereinheit Amplitudenkleinpasscharakter und der Drosselkanal Frequenztiefpasscharakter aufweist. Unter dem Amplitudenkleinpasscharakter wird verstanden, dass Schwingungen mit Amplituden unterhalb einer bestimmten Amplitude, die auch als Grenzamplitude bezeichnet wird, zumindest annähernd ungeschwächt oder unverändert passieren können, wohingegen Schwingungen mit Amplituden, die der Grenzamplitude entsprechen oder größer sind, gedämpft oder gesperrt werden. Die erste Steuereinheit bildet deshalb einen Amplitudenfilter aus, der Schwingungen mit einer Amplitude ab der Grenzamplitude zumindest im Wesentlichen sperrt. Mit der Amplitude ist vorzugsweise die Amplitude des Drucks der Hydraulikflüssigkeit in der Arbeitskammer gemeint.

Mit dem Amplitudenkleinpasscharakter der ersten Steuereinheit wird effektiv verhindert, dass niederfrequente Schwingungen mit großen Amplituden von der ersten Steuereinheit übertragen werden. Vielmehr sperrt die erste Steuereinheit die niederfrequenten Schwingungen aufgrund ihrer großen Amplitude. Deshalb bleibt die Blähsteifigkeit der Arbeitskammer erhalten und die Hydraulikflüssigkeit durchströmt den Drosselkanal, was eine Dämpfung der entsprechenden Schwingungen gewährleistet.

Höherfrequente Schwingungen treten - wie bereits erläutert - zumeist mit kleinen Amplituden auf. Sie werden nicht von dem Drosselkanal übertragen. Jedoch können sie die erste Steuereinheit aufgrund ihrer kleinen Amplitude passieren. Durch die Kopplung der ersten Steuereinheit mit der zweiten Steuereinheit mittels der Zwischenkammer werden die höherfrequenten Schwingungen an die zweite Steuereinheit übertragen. Die zweite Steuereinheit ist vorzugsweise zur Isolation von Schwingungen, insbesondere von höherfrequenten Schwingungen, ausgestaltet. Dies kann durch die jeweilige Anpassung der Steifigkeit, insbesondere Biegesteifigkeit, einer bevorzugt zugehörigen Steuermembran erfolgen. Die höherfrequenten Schwingungen können also durch die zweite Steuermembran isoliert werden. Dabei wird auf die eingangs erläuterten Zusammenhänge Bezug genommen, die hier analog gelten.

Eine weitere bevorzugte Ausgestaltung des Hydrolagers zeichnet sich dadurch aus, dass die erste Steuereinheit mindestens eine Steuermembran aufweist. Steuermembranen sind aus dem Stand der Technik bekannt. Sie sind deshalb günstig herstellbar. Außerdem lässt sich ihre jeweilige Biegesteifigkeit durch eine Materialauswahl und/oder sonstige konstruktive Ausgestaltung besonders einfach anpassen. Außerdem kann mit der mindestens einen Steuereinheit besonders einfach ein Amplitudenkleinpasscharakter für die erste Steuereinheit gewährleistet werden, indem ein Auslenkungshub für die mindestens eine Steuermembran, beispielsweise durch einen Anschlag, begrenzt ist. Dabei kann der Anschlag derart angeordnet und/oder ausgestaltet sein, dass die mindestens eine Steuermembran gegen den Anschlag kommt, sobald die Grenzamplitude erreicht ist. Somit wird eine weitere Auslenkung der mindestens einen Steuermembran für noch größere Amplituden verhindert.

Eine weitere bevorzugte Ausgestaltung des Hydrolagers zeichnet sich dadurch aus, dass die mindestens eine Steuermembran der ersten Steuereinheit eine progressive Steifigkeitskennlinie aufweist. Unter einer progressiven Steifigkeitskennlinie wird verstanden, dass die durch die Steifigkeit der mindestens einen Steuermembran verursachte Rückstellkraft überproportional zu einer Auslenkung der jeweiligen Steuermembran zunimmt. Damit nimmt die Rückstellkraft der mindestens einen Steuermembran der ersten Steuereinheit mit der Auslenkung progressiv, insbesondere exponentiell, zu. Kommt es nun zu größeren Druckamplituden in der Hydraulikflüssigkeit der Arbeitskammer, entstehen an der mindestens einen Steuermembran der ersten Steuereinheit zu dem angestiegenen Druck überproportional große Rückstellkräfte, so dass die mindestens eine Steuermembran allenfalls gering ausgelenkt wird. Niederfrequente Schwingungen mit großen Amplituden werden also von der ersten Steuereinheit stark gedämpft oder sogar gesperrt. Dies verhindert effektiv den aus dem Stand der Technik bekannten Dämpfungsverlust. Bei einem Auftreten von kleinen Amplituden ist die Rückstellkraft der mindestens einen Steuermembran vergleichsweise klein. Höherfrequente Schwingungen mit kleinen Amplituden lassen sich deshalb besonders gut übertragen.

Als weiter vorteilhaft hat sich erwiesen, wenn die Steifigkeit der zweiten Steuereinheit kleiner als die Steifigkeit der ersten Steuereinheit ist. Dies gilt vorzugsweise dann, wenn die erste Steuereinheit eine Steuermembran mit einer progressiven Steifigkeitskennlinie aufweist. Das zuvor genannte Verhältnis kann vorzugsweise auch dann gelten, wenn die erste Steuereinheit einen Steuerkolben umfasst, der in einem Steuerzylinder der ersten Steuereinheit verfahrbar gelagert ist, und ein möglicher Kolbenhub durch mindestens einen Anschlag begrenzt ist. Höherfrequente Schwingungen mit kleinen Amplituden können die erste Steuereinheit passieren. Von der Zwischenkammer können sie ebenfalls an die zweite Steuereinheit übertragen werden. Für die gewünschte Isolation der höherfrequenten Schwingungen hat es sich in der Praxis als vorteilhaft erwiesen, wenn die Steuermembranen der zweiten Steuereinheit "weicher" sind, um die kleinen Amplituden zu isolieren. Diese Amplituden können die mit einer kleineren Steifigkeit ausgebildeten Steuermembranen nämlich zu Schwingungen anregen, die wiederum die Isolation der anregenden Schwingungen verursachen.

Eine weitere bevorzugte Ausgestaltung des Hydrolagers zeichnet sich dadurch aus, dass mindestens zwei Steuermembranen der ersten Steuereinheit unterschiedliche Steifigkeitskennlinien aufweisen. Somit ist es möglich, einen Frequenzbandpass mittels der ersten Steuereinheit zu bilden. Dabei können die obere und die untere Frequenzgrenze derart ausgestaltet sein, dass zur Isolation vorgesehenen Schwingungen mit Frequenzen zwischen den genannten Grenzen passieren können und die Schwingungen mit den übrigen Frequenzen gesperrt oder gedämpft werden. Die zu sperrenden Schwingungen korrelieren insbesondere mit den Amplituden der niederfrequenten Schwingungen. Somit kann eine Entkopplung der Funktion des Drosselkanals und der Isolationsfunktion der zweiten Steuereinheit gewährleistet werden. Beide Funktionen können deshalb unabhängig optimiert werden.

Eine weitere bevorzugte Ausgestaltung des Hydrolagers zeichnet sich dadurch aus, dass die erste Steuereinheit einen Frequenzhochpass- oder Frequenzbandpasscharakter aufweist. Niederfrequente Schwingungen mit großer Amplitude werden deshalb von der ersten Steuereinheit effektiv an einer Übertragung an die Zwischenkammer gehindert. Somit verhindert die erste Steuereinheit, dass sich das Arbeitskammervolumen der Arbeitskammer durch die erste Steuereinheit bei niederfrequenten Schwingungen verändert, insbesondere vergrößert. Eine Grenzfrequenz für den Frequenzhochpass ist beispielsweise 20 Hz. Für den Frequenzbandpass kann das zugehörige Frequenzband beispielsweise zwischen 20 Hz und 400 Hz, vorzugsweise zwischen 20 Hz und 200 Hz sein. Mit der zuletzt genannten Ausgestaltung der ersten Steuereinheit tritt also kein Dämpfungsverlust für die niederfrequenten Schwingungen durch die erste Steuereinheit auf. Mit anderen Worten verbessert sich die Dämpfung von niederfrequenten Schwingungen mit großen Amplituden mittels des Drosselkanals.

Eine weitere bevorzugte Ausgestaltung des Hydrolagers zeichnet sich dadurch aus, dass die Zwischenkammer mit Hydraulikflüssigkeit gefüllt ist. Die Zwischenkammer dient zur Übertragung von Schwingungen zwischen der ersten Steuereinheit und der zweiten Steuereinheit. Grundsätzlich kann die Zwischenkammer deshalb mit einem beliebigen, geeigneten Medium gefüllt sein. Hydraulikflüssigkeit als Füllmedium hat sich hier als besonders vorteilhaft erwiesen, da die Übertragung von Schwingungen mit der Hydraulikflüssigkeit besonders linear erfolgt.

Eine weitere bevorzugte Ausgestaltung des Hydrolagers zeichnet sich dadurch aus, dass die erste Steuereinheit oder die mindestens eine Steuermembran der ersten Steuereinheit die Arbeitskammer und die Zwischenkammer bis auf einen Ausgleichsspalt voneinander trennt. Dies ist insbesondere dann sinnvoll, wenn die Arbeitskammer und die Zwischenkammer jeweils mit Hydraulikflüssigkeit gefüllt sind. Eine vollständige Abdichtung zwischen der Arbeitskammer und der Zwischenkammer ist dann nicht zwingend notwendig, da sich die Hydraulikflüssigkeiten vermischen können, ohne die Betriebsfähigkeit des Hydrolagers zu verhindern. Vielmehr kann ein Ausgleichsspalt hilfreich sein, wenn Druckspitzen in der Arbeitskammer auftreten. Denn bei Druckspitzen kann Hydraulikflüssigkeit durch den Ausgleichsspalt von der Arbeitskammer in die Zwischenkammer, oder umgekehrt, strömen, was einen maximalen Druck in der Arbeitskammer herabsetzt. Deshalb ist die Arbeitskammer einer geringeren Maximalbelastung ausgesetzt, was die Lebensdauer des Hydrolagers erhöht. Darüber hinaus können aufgrund des Ausgleichsspalts mehrere Arbeitspunkte für das Hydrolager vorgesehen sein. Federt die Tragfeder beispielsweise um einen bestimmten Wert stationär ein, so kann ein Druckausgleich zwischen der Arbeitskammer und der Zwischenkammer durch Austausch von Hydraulikflüssigkeit zwischen den beiden Kammern mittels des Ausgleichsspalts erfolgen. Treten nun Schwingungen um den stationären Wert auf, können diese aufgrund des Druckausgleichs analog zu den vorherigen Erläuterungen gedämpft und/oder isoliert werden.

Eine weitere bevorzugte Ausgestaltung des Hydrolagers zeichnet sich dadurch aus, dass die erste Steuereinheit passiv ausgebildet ist. Eine passive Ausbildung der ersten Steuereinheit hat sich in der Praxis als besonders einfach herzustellen und kostengünstig erwiesen. Darüber hinaus kann die Steuereinheit aufgrund ihres passiven Charakters besonders platzsparend ausgebildet sein. Bereits erläutert wurde, dass die Steuereinheit hierzu mindestens eine Steuermembran aufweisen kann. Alternativ oder ergänzend kann die erste Steuereinheit einen Steuerkolben aufweisen, der in einem Steuerzylinder der Steuereinheit eingebracht ist, wobei die eine stirnseitigen Öffnung des Steuerzylinder zu der Arbeitskammer hin geöffnet ist und die gegenüberliegende, stirnseitigen Öffnung des Steuerzylinder zu der Zwischenkammer hin geöffnet ist. Die Bewegung des Steuerkolbens kann durch Dämpfungsmittel gedämpft sein. Alternativ oder ergänzend kann der Steuerkolben, beispielsweise durch eine Feder, einer Rückstellkraft in Abhängigkeit einer Auslenkung in Längsrichtung des Steuerzylinders ausgesetzt sein. Weiter alternativ oder ergänzend kann die Auslenkung des Steuerkolbens in Längsrichtung des Steuerzylinders, insbesondere durch Anschläge, begrenzt sein. Mit den Anschlägen kann der Druck bzw. eine Druckerhöhung in der Zwischenkammer besonders einfach begrenzt werden. Sollten nun niederfrequente Schwingungen mit großen Druckamplituden in der Arbeitskammer auftreten, so werden diese aufgrund des begrenzten Auslegungsweges des Steuerkolbens nicht auf die Zwischenkammer und deshalb auch nicht auf die zweite Steuereinheit übertragen. Die erste Steuereinheit mit dem mindestens einen Steuerkolben weist deshalb für Schwingungen mit großen Amplituden eine besonders hohe Steifigkeit auf, was einen Dämpfungsverlust verhindert. Hochfrequente Schwingungen mit kleiner Amplitude können von dem Steuerkolben übertragen werden, da dieser bei derartigen kleinen Amplituden nicht gegen die Anschläge trifft. Somit können die hochfrequenten Schwingungen von der Arbeitskammer auf die erste Steuereinheit, von dieser auf die Zwischenkammer und sodann auf die zweite Steuereinheit übertragen werden, an der resultierende Schwingungen verursacht werden, die zu der gewünschten Isolation der hochfrequenten Schwingungen führen.

Die erfindungsgemäße Ausgestaltung des Hydrolagers zeichnet sich dadurch aus, dass die zweite Steuereinheit mindestens eine Steuermembran aufweist, wobei mindestens eine Steuermembran der ersten Steuereinheit und mindestens eine Steuermembran der zweiten Steuereinheit von einer gemeinsamen Membran gebildet sind. Hierbei kann die gemeinsame Membran in einem Bereich zwischen den auszubildenden Steuermembranen geklemmt sein. Eine entsprechende Klemmung ist sodann eine Befestigung für die zugehörigen Steuermembranen. Zudem kann die Klemmung zur Trennung der Steuermembranen und der angrenzenden Kammern dienen. Eine derartige Ausgestaltung mit einer gemeinsamen Membran hat sich in der Praxis als besonders günstig für die Herstellung erwiesen. Denn auf diese Weise ist nur jeweils eine gemeinsame Membran herzustellen. Außerdem lässt sich die gemeinsame Membran einfacher und schneller montieren.

Eine weitere bevorzugte Ausgestaltung des Hydrolagers zeichnet sich dadurch aus, dass das Hydrolager eine Druckkammer aufweist, wobei die zweite, bewegbare Steuereinheit zwischen der Zwischenkammer und der Druckkammer angeordnet ist und diese beiden Kammer voneinander trennt. Die zweite Steuereinheit dichtet die Druckkammer also gegenüber der Zwischenkammer ab. Dennoch können die beiden Kammern aufgrund der beweglichen Ausgestaltung der zweiten Steuereinheit hydraulisch miteinander kommunizieren. Bereits zuvor wurde erläutert, dass die zweite Steuereinheit vorzugsweise mindestens eine Steuermembran aufweist. Die hydraulische Kommunikation kann sodann durch ein Auslenken der Steuermembran erfolgen. Um die Rückstellkräfte der mindestens einen Steuermembran der zweiten Steuereinheit zu unterstützen und/oder vorteilhaft einzustellen, kann die Druckkammer vorgesehen sein. Die Druckkammer kann mit einem geeigneten Medium, insbesondere einem komprimierbaren Medium, gefüllt sein. Werden nun hochfrequente Schwingungen mittels der Zwischenkammer auf die zweite Steuereinheit übertragen, können diese an die Druckkammer übermittelt werden. Durch die Anregung der zweiten Steuereinheit sowie der Druckkammer können resultierende Schwingungen verursacht werden, die auf die Zwischenkammer rückgekoppelt werden, um die gewünschte Isolation der anregenden Schwingungen zu bewirken. Mittels der Druckkammer kann die Art und/oder das Verhalten der Rückkopplung und somit das der resultierenden Schwingungen beeinflusst und/oder eingestellt werden. So ist es Beispiel durch Anpassung der Größe und/oder Form der Druckkammer möglich, dass die Isolation der anregenden Schwingungen über eine besonders große Frequenzbandbreite erfolgt.

Eine weitere bevorzugte Ausgestaltung des Hydrolagers zeichnet sich dadurch aus, dass die Druckkammer mit einem Gas oder einem Gasgemisch gefüllt ist. Das Füllen der Druckkammer mit Gas oder einem Gasgemisch hat sich der Praxis als besonders einfach und vorteilhaft erwiesen. Denn dadurch lässt sich ein Druck in der Druckkammer einstellen, der vorherrscht, sofern keine Schwingungen auftreten. Dieser Druck beeinflusst deshalb die Nachgiebigkeit der Steuermembran bei einem Auftreten von hochfrequenten Schwingungen mit niedrigen Druckamplitude, insbesondere in der Zwischenkammer. Somit kann durch das Gas bzw. das Gasgemisch in der Druckkammer das Isolationsverhalten für hochfrequente Schwingungen eingestellt werden.

Eine weitere bevorzugte Ausgestaltung des Hydrolagers zeichnet sich dadurch aus, dass das Hydrolager einen Aktor aufweist, der zum gesteuerten Bewegen der zweiten Steuereinheit oder der mindestens einen Steuermembran der zweiten Steuereinheit ausgestaltet ist. Bei der zweiten Steuereinheit handelt es sich also vorzugsweise um eine aktive Steuereinheit. Die Auslenkung einer Steuermembran zur Isolation von anregenden Schwingungen wurde bereits eingangs erläutert. Der Aktor, welcher die zweite Steuereinheit, insbesondere die mindestens eine zugehörige Steuermembran, auslenken kann, dient ebenfalls zur Anregung von Schwingungen, die zur Isolation von Schwingungen dienen. Deshalb wird an dieser Stelle auf die eingangs ausgeführten Erläuterungen analog Bezug genommen.

Eine weitere bevorzugte Ausgestaltung des Hydrolagers zeichnet sich dadurch aus, dass die Zwischenkammer als Steuerkanal zwischen der ersten Steuereinheit und der zweiten Steuereinheit ausgestaltet ist. Durch die kanalartige Ausbildung der Zwischenkammer erstreckt sich die Zwischenkammer von der ersten Steuereinheit zu der zweiten Steuereinheit. Darüber hinaus kann ein derartiger Kanal besonders klein, also insbesondere mit einem besonders kleinen Volumen ausgebildet sein, so dass Verluste, insbesondere Dämpfungsverluste, bestimmbar sind. Um die Verluste möglichst klein zu halten, kann der Querschnitt des Steuerkanals besonders groß gewählt werden. Ist es vorgesehen, dass durch den Steuerkanal Schwingungen zusätzlich gedämpft werden, so kann der Querschnitt des Kanals, zumindest abschnittsweise, kleiner gewählt werden. Darüber hinaus kann der Steuerkanal eine bestimmte Länge aufweisen, so dass die erste Steuereinheit und die zweite Steuereinheit entsprechend weit voneinander beanstandet angeordnet sein können. Dies erlaubt eine besonders gute Ausnutzung des zur Verfügung stehenden Bauraums des Hydrolagers, was eine kompakte Ausgestaltung des Hydrolagers erlaubt.

Eine weitere bevorzugte Ausgestaltung des Hydrolagers zeichnet sich dadurch aus, dass die Arbeitskammer und die Ausgleichskammer in einer Längsrichtung des Hydrolagers hintereinander angeordnet sind, die Arbeitskammer und die Ausgleichskammer durch eine Trennwand voneinander getrennt sind, und die Druckkammer zu einer von der Trennwand abgewandten Stirnseite der zweiten Steuereinheit angeordnet ist. Die eingangs genannten Eigenschaften des aus dem Stand der Technik bekannten Hydrolagers gelten in analoger Weise, so dass hier auf die entsprechenden Erläuterungen Bezug genommen wird. Durch die Anordnung der Druckkammer zu einer von der Trennwand abgewandten Stirnseite der zweiten Steuereinheit kann ein sogenanntes invertiertes, aktives Hydrolager geschaffen werden.

Eine weitere bevorzugte Ausgestaltung des Hydrolagers zeichnet sich dadurch aus, dass der Steuerkanal in einem Bereich zwischen der Trennwand und der Druckkammer angeordnet ist. Insbesondere ist der Steuerkanal in einem Bereich zwischen der Trennwand und der zweiten Steuereinheit angeordnet. Durch diese Anordnung lässt sich besonders einfach das zuvor genannte, invertierte Hydrolager schaffen. Darüber hinaus führt die Anordnung des Steuerkanals in dem genannten Bereich zu einer besonders kompakten Ausgestaltung des Hydrolagers.

Die zweite Steuereinheit kann vorzugsweise als Zylinder-Steuerkolben-Anordnung ausgestaltet sein. Wird der Steuerkolben in dem Zylinder in Richtung der Druckkammer verschoben, so erhöht sich der Druck in der Druckkammer und/oder verkleinert sich das Volumen der Druckkammer. Gleichzeitig verursacht die Verschiebung des Zylinderkolbens eine Verringerung des Drucks in der Zwischenkammer und sodann auch in der Arbeitskammer. Wird der Steuerkolben in dem Zylinder in Richtung der Zwischenkammer verschoben, so erhöht sich der Druck in der Zwischenkammer bzw. in der Arbeitskammer. Der Zylinderkolben kann deshalb in analoger Weise zu der Steuermembran zur Isolation von hochfrequenten Schwingungen des Hydrolagers eingesetzt werden. Zum gesteuerten Auslenken des Steuerkolbens in Zylinderlängsrichtung des Zylinders kann der Aktor dienen.

Indem der Steuerkolben nicht stoffschlüssig an dem Zylinderkanal befestigt ist, sondern gleitend in dem Zylinders verschiebbar ist, kann die Steifigkeit des Steuerkolben beliebig erhöht werden, ohne die Vergrößerung des Aktors zu verursachen. Bevorzugt ist der Steuerkolben aus Metall und/oder aus einem hochfesten Kunststoff. Insbesondere ist der Steuerkolben starr ausgebildet. Weist der Steuerkolben nun eine besonders hohe Steifigkeit auf, wird der Steuerkolben bei einer quasistatischen Belastung sowie bei niederfrequenten Schwingungen allenfalls kaum elastisch verformt. Der Steuerkolben hat deshalb fast keinen negativen Einfluss auf die dynamische Steifigkeit des Hydrolagers.

Bei dem Aktor handelt es sich insbesondere um einen elektromagnetischen Linearaktor und vorzugsweise um einen Reluktanz-Linearaktor. Grundsätzlich können jedoch auch andere Aktoren, insbesondere andere elektrische Aktoren, eingesetzt werden. Als besonders zweckmäßig haben sich Aktoren herausgestellt, die jeweils einen Stator und einen Anker umfassen. Der Anker ist dabei beweglich gelagert zu dem Stator ausgebildet, so dass der Anker gegenüber dem Stator in Längsrichtung des Aktors ausgelenkt werden kann. Der Anker und der Steuerkolben bzw. die Steuermembran können mechanisch miteinander verbunden und/oder gekoppelt sein. Dabei kann es vorgesehen sein, dass der Anker nicht unmittelbar mit dem Steuerkolben verbunden ist, sondern dass beispielsweise ein Gelenksmechanismus und/oder ein Stößel vorgesehen sind, die zwischen dem Anker und dem Steuerkolben bzw. der Steuermembran angeordnet sind, um Bewegungen und/oder Kräfte vom Anker auf den Steuerkolben bzw. die Steuermembran zu übertragen. Ein derartiger Gelenkmechanismus und/oder Stößel ist sodann dem Aktor zugeordnet.

Eine weitere vorteilhafte Ausgestaltung des Hydrolagers zeichnet sich dadurch aus, dass zu einer oder beiden Stirnseiten der ersten Steuereinheit, insbesondere der mindestens einen zugehörigen Steuermembran, mindestens ein Fluidlenkelement vorgesehen ist bzw. sind. Mit dem mindestens einen Fluidlenkelement lässt sich einstellen bzw. beeinflussen, welche Schwingungsfrequenzen von der ersten Steuereinheit übertragbar sind. Insbesondere wird von mindestens einem der Fluidlenkelemente mindestens ein Fluidkanal ausgebildet, so dass dieser in Verbindung mit der ersten Steuereinheit die zuvor genannten, übertragbaren Schwingungsfrequenzen beeinflusst. Insbesondere kann einer Einheit aus der der ersten Steuereinheit und dem mindestens einen Fluidkanal eine bestimmte Eigenfrequenz zugeordnet werden, die von der Geometrie des Fluidkanals abhängt.

Gemäß einem weiteren Aspekt wird die eingangs genannte Aufgabe außerdem durch ein Kraftfahrzeug gelöst, das einen Fahrzeugrahmen, einen Motor und ein Motorlager umfasst, das eine lagernde Verbindung zwischen dem Motor und dem Fahrzeugrahmen herstellt, wobei das Motorlager durch ein erfindungsgemäßes Hydrolager ausgebildet ist. Dabei gelten Merkmale, Details und Vorteile, die im Zusammenhang mit dem erfindungsgemäßen Hydrolager beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigt:
- Fig. 1: eine schematische Querschnittsansicht einer ersten Ausgestaltung des Hydrolagers,
- Fig. 2: eine schematische Draufansicht der Trennwand und der ersten Steuereinheit,
- Fig. 3: eine schematische Draufansicht einer weiteren Ausgestaltung der Trennwand und der ersten Steuereinheit,
- Fig. 4: eine graphische Darstellung der Übertragungsfunktion der ersten Steuereinheit, und
- Fig. 5: eine schematische Querschnittsansicht einer weiteren Ausgestaltung des Hydrolagers.

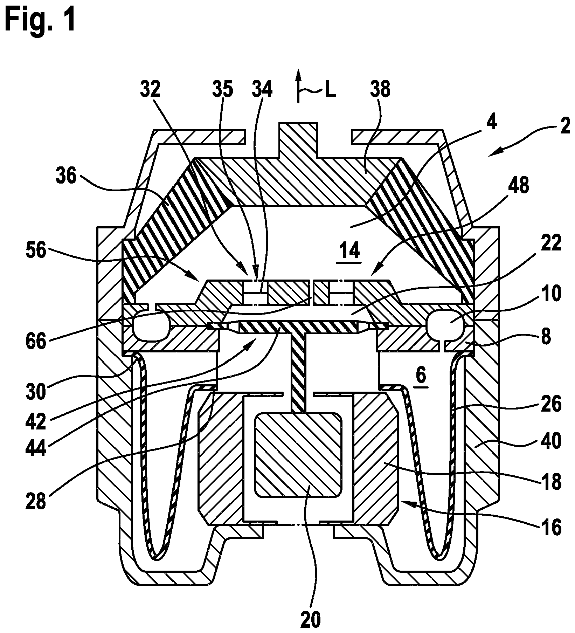

Aus der Figur 1 ist ein erfindungsgemäßes Hydrolager 2 zu erkennen. Das Hydrolager 2 umfasst eine als Gummielement ausgestaltete Tragfeder 36. Diese Tragfeder 36 ist für gewöhnlich als Hohlkörper ausgebildet, wobei die Oberseite der Tragfeder 36 eine Abdeckung 38 aufweist. An der Abdeckung 38 ist zumeist ein Anschlusselement zur Befestigung eines Motors angebracht. In einer einfachen Ausgestaltung handelt es sich bei dem Anschlusselement um einen Gewindebolzen, der mit dem Motor verschraubt werden kann. An der Unterseite der Tragfeder 36 schließt die Trennwand 8 an. Zwischen der Tragfeder 36, der Abdeckung 38 und der Trennwand 8 bildet sich die Arbeitskammer 4 aus. Die Arbeitskammer 4 ist mit einer Hydraulikflüssigkeit gefüllt. Hierbei handelt es sich vorzugsweise um ein Gemisch aus Öl und Wasser. In Längsrichtung L unterhalb der Trennwand 8 schließt das hohlzylindrische Basisgehäuse 40 an. In das Basisgehäuse 40 ist die Rollmembran 26 eingebracht, die aus elastischem Material hergestellt ist. Durch ihre Ringform sind ihre radial innenseitige Kante 28 und ihre radial außenseitigen Kante 30 an der Unterseite der Trennwand 8 bzw. an einem davon wegführenden Flansch dichtend befestigt.

Der von der Trennwand 8 und der Rollmembran 26 eingeschlossene Raum bildet die Ausgleichskammer 6 des Hydrolagers 2. Die Ausgleichskammer 6 ist mit Hydraulikflüssigkeit gefüllt, die vorzugsweise ein Gemisch aus Öl und Wasser ist. Aus der Figur 1 ist somit zu entnehmen, dass die Trennwand 8 zwischen der Arbeitskammer 4 und den Ausgleichskammern 6 angeordnet ist und diese hydraulisch miteinander verbindet.

Zur Dämpfung von Schwingungen, die von dem Motor über die Abdeckung 38 auf die Tragfeder 36 und somit auch auf ein Arbeitskammervolumen 14 der Arbeitskammer 4 wirken, ist ein zwischen der Arbeitskammer 4 und der Ausgleichskammer 6 ausgebildeter Drosselkanal 10 vorgesehen, der zum Austausch von Hydraulikflüssigkeit dient. Wie in Fig. 1 dargestellt, wird der Drosselkanal 10 zumindest teilweise von der Trennwand 8 gebildet oder ist in diese eingefasst. Der Drosselkanal 10 ist zumindest ringabschnittsförmig, wobei sich der Drosselkanal 10 mit einer Öffnung an dem einen Ringende zu der Arbeitskammer 4 und mit einer weiteren Öffnung an dem anderen Ringende zu der Ausgleichskammer 6 öffnet.

Wird die Tragfeder 36 durch Schwingungen gestaucht, führt dies zumeist zu einer Erhöhung des Drucks der Hydraulikflüssigkeit in der Arbeitskammer 4 und/oder zu einer Verkleinerung des Arbeitskammervolumens 14 der Arbeitskammer 4. In beiden Fällen erfolgt ein Volumenstrom der Hydraulikflüssigkeit aus der Arbeitskammer 4 durch den Drosselkanal 10 in die Ausgleichskammer 6. Der Drosselkanal 10 weist einen derart kleinen Durchmesser auf, dass Dissipation entsteht und die auf die Tragfeder 36 einwirkenden Schwingungen gedämpft werden. Die Dämpfung mittels des Drosselkanals 10 ist jedoch nur für niederfrequentierte Schwingungen effektiv. Bei höherfrequenten Schwingungen, so beispielsweise ab 20 Hz, werden Schwingungen durch den Drosselkanal 10 allenfalls gering gedämpft oder verhindert. Es wird deshalb davon gesprochen, dass der Drosselkanal 10 für höherfrequente Schwingungen Sperrcharakter aufweist. Mit anderen Worten ist der Drosselkanal 10 zur Dämpfung von niederfrequenten Schwingungen, vorzugsweise bis 20 Hz, ausgestaltet und geeignet.

Zur Erreichung einer besonders guten Dämpfung bei niederfrequenten Schwingungen mit großer Amplitude ist es wünschenswert, dass eine Volumenveränderung der Arbeitskammer 4 ausschließlich durch das Strömen von Hydraulikflüssigkeit aus der Arbeitskammer 4 durch den Drosselkanal 10 in die Ausgleichskammer 6 erfolgt. In der Praxis wurde jedoch festgestellt, dass die Arbeitskammer 4 auch anderen Volumenveränderungen bei den zuvor genannten Schwingungen unterliegen kann. So kann es vorkommen, dass die Tragfeder 36 durch ihre endliche Steifigkeit dem erhöhten Druck bei Schwingungen mit großen Amplituden nachgibt und sich das Arbeitskammervolumen 14 der Arbeitskammer 4 erhöht. Ähnliche Effekte können durch eine aus dem Stand der Technik bekannte Steuermembran entstehen, sofern sie einen Wandungsabschnitt der Arbeitskammer 4 bildet. Die aus dem Stand der Technik bekannten Steuermembranen weisen zumindest radial außenseitig geringe Biegesteifigkeiten auf, so dass bei dem Auftreten von Schwingungen mit großer Amplitude ein Nachgeben der Steuermembranen zu beobachten ist. Treten nun niederfrequente Schwingungen mit großen Amplituden auf, gibt die aus dem Stand der Technik bekannte Steuermembran nach, um das Arbeitskammervolumen 14 zu erhöhen. Dies hat zur Folge, dass ein entsprechendes Volumen an Hydraulikflüssigkeit nicht durch den Drosselkanal 10 strömt, so dass dieser nicht strömende Anteil der Hydraulikflüssigkeit auch keinen Beitrag zur Dämpfung der niederfrequenten Schwingungen leisten kann. Es wird deshalb auch von einem Dämpfungsverlust aufgrund der hohen Nachgiebigkeit der aus dem Stand der Technik bekannten Steuermembran gesprochen.

Um den zuvor erläuterten Dämpfungsverlust zu verhindern oder möglichst klein zu halten, ist erfindungsgemäß eine Reihenschaltung von zwei Steuereinheiten 32, 42 vorgesehen, die hydraulisch von einer Zwischenkammer 22 gekoppelt sind. Die erste Steuereinheit 32 ist zwischen der Arbeitskammer 4 und der Zwischenkammer 22 angeordnet. Die Steuereinheit 32 bildet deshalb an ihrer einen Seite einen Wandungsabschnitt der Arbeitskammer 4 und an einer anderen, insbesondere gegenüberliegenden, Seite einen Wanderungsabschnitt der Zwischenkammer 22. Die erste Steuereinheit 32 trennt deshalb die beiden, zuvor genannten Kammern 4, 22. Wie aus der Figur 1 zu entnehmen ist, weist die erste Steuereinheit 32 mindestens eine Steuermembran 34 auf. Die Steuermembran 34 ist in Längsrichtung L des Hydrolagers 2 elastisch bewegbar und/oder elastisch verformbar. Es wird deshalb auch davon gesprochen, dass die erste Steuereinheit 32 bewegbar ist. Beabstandet von der bzw. jeder Steuermembran 34 ist oberhalb der jeweiligen Steuermembran 34 ein Fluidlenkelement 35 angeordnet. Dabei ist das jeweilige Fluidlenkelement 35 mit Öffnungen versehen, um Hydraulikflüssigkeit zu der zugehörigen Steuermembran 34 passieren zu lassen. In einer Ausgestaltung handelt es sich bei dem mindestens einen Fluidlenkelement 35 um ein Gitter. Analog zu dem mindestens einen zuvor erläuterten Fluidlenkelement 35 ist bevorzugt jeweils ein weiteres Fluidlenkelement 35 beabstandet unterhalb der oder jeder Steuermembran 34 angeordnet. Anstatt der Steuermembran 34 kann die erste Steuereinheit 32 einen Steuerkolben aufweisen, der in einem Zylinder der ersten Steuereinheit 32 geführt ist, wobei sich der Zylinder zu einer Stirnseite zu der Arbeitskammer 4 und zu der gegenüberliegenden Stirnseite zu der Zwischenkammer 22 öffnet. Auch in diesem Fall wird davon gesprochen, dass die erste Steuereinheit 32 bewegbar ist.

Durch die Beweglichkeit der ersten Steuereinheit 32 können Schwingungen der Hydraulikflüssigkeit aus der Arbeitskammer 4 auf die erste Steuereinheit 32 übertragen werden. Die erste Steuereinheit 32 überträgt diese Schwingungen an die Zwischenkammer 22. Für höherfrequente Schwingungen mit kleiner Amplitude, insbesondere Druckamplitude, der Hydraulikflüssigkeit in der Arbeitskammer 4 ist dies auch gewünscht. Zu verhindern ist jedoch eine Übertragung von niederfrequenten Schwingungen mit großer Amplitude der Hydraulikflüssigkeit in der Arbeitskammer 4 auf die Zwischenkammer 22. Dies wird erreicht, indem die erste Steuereinheit 32 niederfrequente Schwingungen mit großer Amplitude sperrt. Indem diese Schwingungen von der ersten Steuereinheit 32 an einer Übertragung gehindert werden, tritt durch die erste Steuereinheit 32 keine oder allenfalls eine nur sehr geringe Veränderung des Arbeitskammervolumens 14 der Arbeitskammer 4 bei derartigen Schwingungen ein. Ein Dämpfungsverlust bei niederfrequenten Schwingungen mit großen Amplituden wird durch die erste Steuereinheit 32 also effektiv verhindert bzw. gemindert. Mit anderen Worten wird die Dämpfung von niederfrequenten Schwingungen mit großen Amplituden mittels des Drosselkanals 10 verbessert.

Um das Sperren von niederfrequenten Schwingungen mit großen Amplituden mittels der ersten Steuereinheit 32 zu erreichen, weist die erste Steuereinheit 32 einen Amplitudenkleinpasscharakter auf. Schwingungen mit einer Amplitude bis zu einer bestimmten Amplitude werden also von der ersten Steuereinheit 32 übertragen bzw. können diese passieren. Schwingungen ab der bestimmten Amplitude oder größer werden von der ersten Steuereinheit 32 nicht übertragen bzw. können diese nicht passieren. Die konstruktive Umsetzung einer derartigen, ersten Steuereinheit 32 kann beispielsweise mittels der Steuermembran 34 erfolgen, die eine progressive Steifigkeitskennlinie aufweist. Je größer die Verbiegung der Steuermembran 34 ist, desto größer wird die Rückstellkraft. Die Rückstellkraft weist jedoch aufgrund der progressiven Steifigkeitskennlinie ein exponentielles Verhältnis zu der Verbiegung auf. Somit werden überproportional große Rückstellkräfte von der Steuermembran 34 hervorgerufenen, wenn Schwingungen mit größeren Amplituden auf die Steuermembran 34 treffen. Aufgrund des exponentiellen Charakters der Steifigkeitskennlinie wird deshalb ab einer bestimmten Amplitude bzw. einer entsprechenden elastischen Verbiegung der Steuermembran 34 davon gesprochen, dass die zugehörigen Schwingungen von der Steuermembran 34 nicht übertragen werden bzw. stark gedämpft werden. Durch eine derartige Steuermembran 34 kann die Steuereinheit 32 einen Sperrcharakter für größere Amplituden aufweisen. Mit anderen Worten können nur kleinere Amplituden die Steuereinheit 32 passieren.

In der Praxis wurde festgestellt, dass niederfrequente Schwingungen mit großen Amplituden auftreten. Indem nun Schwingungen mit großer Amplitude von der ersten Steuereinheit 32 gesperrt werden, können Schwingungen mit kleiner Amplitude, welche mit einer höheren Frequenz auftreten, die erste Steuereinheit 32 passieren. Derartige Schwingungen treffen sodann auf die zweite Steuereinheit 42. Die zweite Steuereinheit 42 ist dazu ausgestaltet, höherfrequente Schwingungen zu isolieren. Dazu weist die zweite Steuereinheit 42 vorzugsweise mindestens eine Steuermembran 44 auf. Insbesondere weist die Steuermembran 44 der zweiten Steuereinheit 42 eine kleinere, insbesondere deutlich kleinere, Steifigkeit als die Steuermembran 34 der ersten Steuereinheit 32 auf. Dies gilt insbesondere dann, wenn die Steuermembran 34 der ersten Steuereinheit 32 eine progressive Steifigkeitskennlinie aufweist und der Vergleich vorzugsweise mit einer mittleren Steifigkeit der Steuermembran 34 der ersten Steuereinheit 32 erfolgt.

Die geringe Steifigkeit der Steuermembran 44 der zweiten Steuereinheit 42 ist jedoch nicht nachteilig für die Dämpfung von niederfrequenten Schwingungen mit großer Amplitude. Denn derartige Schwingungen werden von der ersten Steuereinheit 32 gesperrt und erreichen deshalb nicht die zweite Steuereinheit 42. Durch die erste Steuereinheit 32 erfolgt deshalb eine funktionale Entkopplung zwischen der Dämpfung mittels des Drosselkanals 10 und der Isolation mittels der zweiten Steuereinheit 42.

Zur Isolation von höherfrequenten Schwingungen des Hydrolagers 2 ist die zweite Steuereinheit 42 bzw. die Steuermembran 44 der zweiten Steuereinheit 42 mittels eines Linearaktors 16 insbesondere in Längsrichtung L des Hydrolagers 2 gesteuert auslenkbar. Bei dem Linearaktor 16 handelt es sich vorzugsweise um einen elektromagnetischen Linearaktor. Andere Linearaktoren sind aber auch möglich. Wird im Fall eines elektromagnetischen Linearaktors 16 der zugehörige Stator 18 bestromt, führt dies zu einer Relativbewegung des Ankers 20, so dass die Steuermembran 44 ausgelenkt wird. Mit der Auslenkung der Steuermembran 44 kommuniziert die Steuereinheit 42 hydraulisch sowohl mit der Zwischenkammer 22 als auch mit der Arbeitskammer 4. Denn die zweite Steuereinheit 42 erzeugt zur Isolation höherfrequente Schwingungen mit kleinen Amplituden, die von der ersten Steuereinheit 32 zwischen den beiden Kammern 22, 4 übertragen werden. Somit dient die zweite Steuereinheit 42 zur Isolation von höherfrequenten Schwingungen. Mittels des Linearaktors 16 kann aktiv kontrolliert werden, welche Art von Schwingungen mittels der Steuermembran 44 der zweiten Steuereinheit 42 erzeugt werden. Bezüglich der notwendigen Steuerung wird auf den bekannten Stand der Technik verwiesen.

Zum Druckausgleich bei statischen Belastungen kann zwischen der Zwischenkammer 22 und der Arbeitskammer 4 ein Ausgleichskanal 66 vorgesehen sein. Dieser weist für gewöhnlich einen sehr kleinen Querschnitt auf, so dass der Ausgleichskanal 66 annähernd keinen Einfluss auf das dynamische Verhalten des Hydrolagers 2 hat. Der Ausgleichskanal 66 kann auch zum Druckausgleich der Zwischenkammer bei Temperaturänderungen dienen.

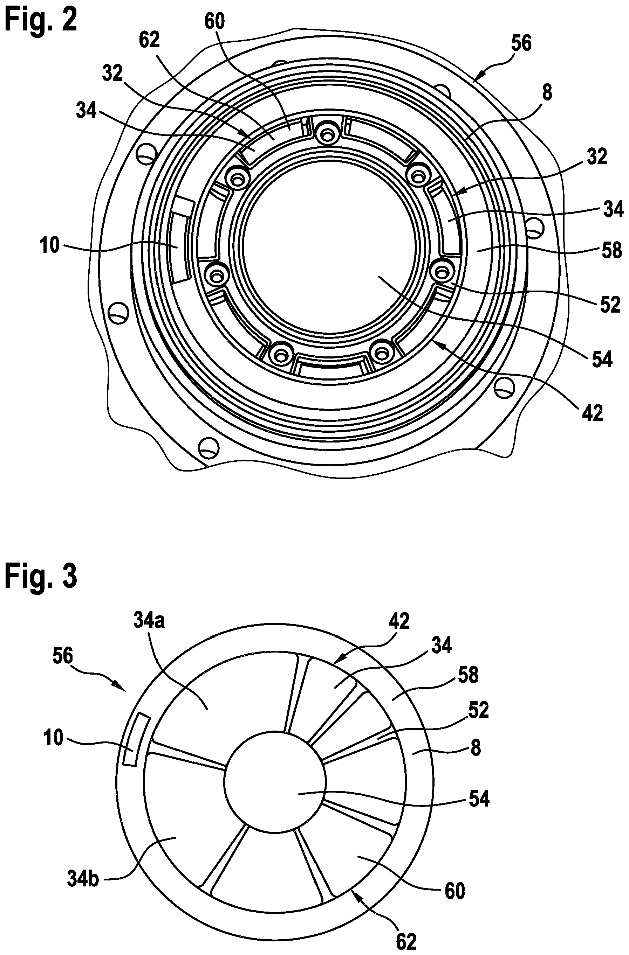

Aus der Figur 2 ist ein Ausschnitt der unterseitigen Wandung 56 der Arbeitskammer 4 zu entnehmen. Ein äußerer Ring 58 der Wandung 56 ist von der Trennwand 8 gebildet. Von diesem Ring 58 ragen eine Mehrzahl voneinander in Umfangsrichtung beabstandete Stege 52 radial nach innen zu einem Kreisabschnitt 54. Zwischen zwei benachbarten Stegen 52, dem Ring 58 und dem Kreisabschnitt 54 entsteht jeweils eine Öffnung 60 zu einem Kanal 62. In jeden der sich auf diese Weise bildenden Kanäle 62 ist eine Steuermembran 34 eingesetzt, welche ein Durchströmen von Hydraulikflüssigkeit durch den jeweiligen Kanal 62 zumindest im Wesentlichen verhindern kann. Wie aus Figur 2 zu erkennen ist, sind mehrere Stege 52 vorgesehen, so dass sich ebenfalls mehrere Kanäle 62 mit jeweils einer Steuermembran 34 ausbilden, wobei die Kanäle 62 und die Steuermembranen 34 der ersten Steuereinheit 32 zugeordnet sind. Jede der Steuermembranen 34 kann stirnseitig umlaufend an einer Kanalwand des jeweils zugehörigen Kanals 62 befestigt und/oder dichtend angebracht sein. Alternativ kann es vorgesehen sein, dass jede Steuermembran 34 eine Kante aufweist, die von dem Kanal 62 beanstandet ist. Dies erlaubt ein Nachgeben der jeweiligen Steuermembran 34, insbesondere bei hohen Druckspitzen in der Arbeitskammer 4. Eine derartige Ausgestaltung erhöht die Lebensdauer des Hydrolagers 2.

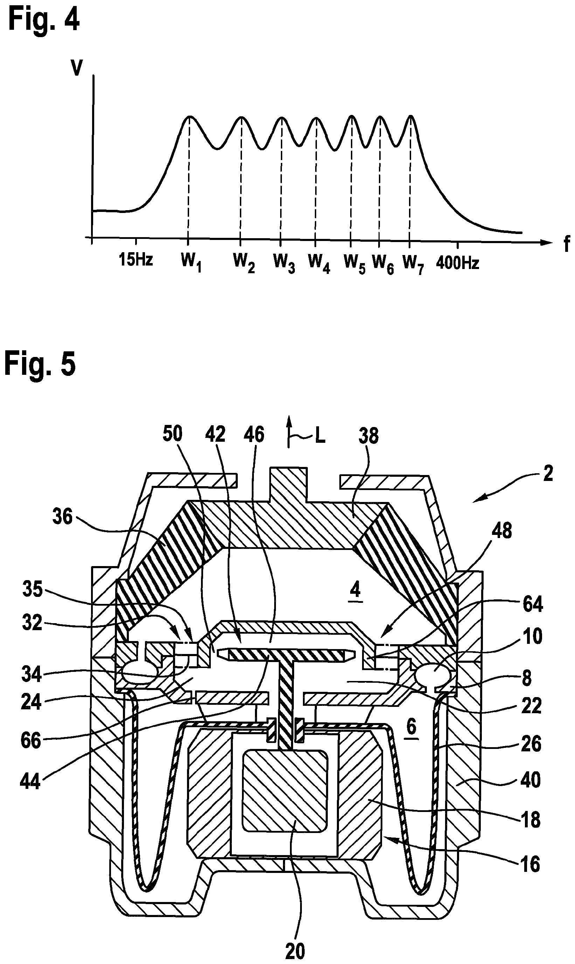

Aus der Figur 3 ist eine weitere Ausgestaltung der unterseitigen Wanderung 56 der Arbeitskammer 4 zu entnehmen. Dabei entspricht der gezeigte Ausschnitt zumindest im Wesentlichen dem in Figur 2 gezeigten Ausschnitt. Es wird deshalb auf die vorangegangenen Erläuterungen Bezug genommen, soweit es sinnvoll ist. Der Ausschnitt der unterseitigen Wandung 56 aus Figur 3 unterscheidet sich im Wesentlichen dadurch, dass die Stege 52 nicht gleichmäßig über einen Ringumfang des Rings 58 verteilt angeordnet sind. Vielmehr weisen die Stege 52 unterschiedliche Abstände voneinander auf. Damit bilden sich Steuermembran 34a, 34b der ersten Steuereinheit 32 mit unterschiedlichen Querschnittsflächen. Aufgrund ihrer jeweiligen, voneinander abweichenden Querschnittsflächen eignen sich die jeweiligen Steuermembranen 34a, 34b zur Übertragung von Schwingungen mit jeweils unterschiedlichen Frequenzen. Mit anderen Worten führen die voneinander abweichenden Querschnittsflächen zu jeweils voneinander abweichenden Eigenfrequenzen der jeweiligen Steuermembran 34a, 34b. Ein entsprechender Zusammenhang ist aus der Figur 4 zu entnehmen. Darin wird die Übertragungsfunktion V der ersten Steuereinheit 32 in Abhängigkeit der Schwingungsfrequenz f dargestellt. Niederfrequente Schwingungen, insbesondere unterhalb einer Frequenz von 15 Hz, werden nur zu einem sehr geringen Teil übertragen. Die Steuermembran 34a weist die größte Oberfläche der Mehrzahl der Steuermembranen 34 der ersten Steuereinheit 32 auf. Korrespondierend ist der Steuermembran 34a die kleinste Resonanzfrequenz ω1 zuzuordnen. Darauf folgt die Steuermembran 34b mit der zweitgrößten Oberfläche bzw. der nächst größeren Resonanzfrequenz ω2. Entsprechendes gilt für die weiteren Steuermembranen 34 der ersten Steuereinheit 32. Dabei sind die Oberflächengrößen bzw. Resonanzfrequenzen der Steuermembranen 34 derart gewählt, dass die erste Steuereinheit 32 einen Frequenzbandpass bildet. Dabei kann die Bandbreite des Frequenzbandpasses an die zu erwartenden höherfrequenten Schwingungen des Hydrolagers 2 derart angepasst sein, dass alle höherfrequenten Schwingungen übertragen werden. Ein derartiger Frequenzbandpass wirkt deshalb als ein Frequenzhochpass für das Hydrolager 2.

Aus der Figur 5 ist eine weitere Ausgestaltung des Hydrolagers 2 in einem schematischen Querschnitt zu entnehmen. Das Hydrolager 2 entspricht zumindest im Wesentlichen dem Aufbau des in Figur 1 gezeigten Hydrolagers 2. Es wird deshalb auf die vorangegangenen Erläuterungen, insbesondere in Bezug zu Figur 1, verwiesen und darauf Bezug genommen, soweit es sinnvoll ist. Das Hydrolager 2 aus Figur 5 unterscheidet sich im Wesentlichen dadurch, dass es sich bei dem Hydrolager 2 um ein so genanntes Hydrolager 2 nach dem invertierten Prinzip handelt. Dabei bildet die Zwischenkammer 22 einen Steuerkanal 24 der von der Arbeitskammer 4 bzw. der ersten Steuereinheit 32 zu der Unterseite der Steuermembran 44 der zweiten Steuereinheit 42 führt. Die Steuermembran 44 ist zwischen der Zwischenkammer 22 bzw. dem Steuerkanal 24 und einer Druckkammer 46 angeordnet, wobei die Druckkammer 46 mit einem Gas oder ein Gasgemisch gefüllt ist. Wie aus der Figur 5 zu erkennen ist, kann die Steuermembranen 44 alternativ als Steuerkolben 44 ausgebildet sein, der radial außenseitig durch einen Ringspalt 50 von einer Zylinderwandung 64 der zweiten Steuereinheit 42 beabstandet ist. Alternativ kann der Steuerkolben 44, insbesondere durch Kolbenringe, in Kontakt mit der Zylinderwandung 64 sein.

Zum Druckausgleich bei statischen Belastungen kann zwischen der Zwischenkammer 22 bzw. dem Steuerkanal 24 und der Ausgleichskammer 6 ein Ausgleichskanal 66 vorgesehen sein. Dieser weist für gewöhnlich einen sehr kleinen Querschnitt auf, so dass der Ausgleichskanal 66 annähernd keinen Einfluss auf das dynamische Verhalten des Hydrolagers 2 hat.

### Bezugszeichenliste

### (Teil der Beschreibung)

- L: Längsrichtung
- 2: Hydrolager
- 4: Arbeitskammer
- 6: Ausgleichskammer
- 8: Trennwand
- 10: Drosselkanal
- 14: Arbeitskammervolumen
- 16: Linearaktor
- 18: Stator
- 20: Anker
- 22: Zwischenkammer
- 24: Steuerkanal
- 26: Rollmembran
- 28: radial innenseitige Kante
- 30: radial außenseitige Kante
- 32: erste Steuereinheit
- 34: Steuermembran
- 34a: Steuermembran
- 34b: Steuermembran
- 35: Fluidlenkelement
- 36: Tragfeder
- 38: Abdeckung
- 40: Basisgehäuse
- 42: zweite Steuereinheit
- 44: Steuermembran
- 46: Druckkammer
- 48: Wandungsabschnitt
- 50: Ausgleichsspalt
- 52: Steg
- 54: Kreisabschnitt
- 56: Wandung
- 58: Ring
- 60: Öffnung
- 62: Kanal
- 64: Zylinderwandung
- 66: Ausgleichskanal

## Patentansprüche

1. Hydrolager (2) mit
- einer Tragfeder (36),
- einer von der Tragfeder (36) zumindest teilweise umfassten Arbeitskammer (4), die mit einer Hydraulikflüssigkeit gefüllt ist,
- einer Ausgleichskammer (6), und
- einem zwischen der Arbeitskammer (4) und der Ausgleichskammer (6) ausgebildeten Drosselkanal (10) zum Austausch von Hydraulikflüssigkeit,
- eine Zwischenkammer (22),
- eine erste, bewegbare Steuereinheit (32), die zwischen der Arbeitskammer (4) und der Zwischenkammer (22) angeordnet ist und diese beiden Kammer (4, 22) voneinander trennt, und
- eine zweite bewegbare Steuereinheit (42), die einen Wandungsabschnitt (48) der Zwischenkammer (22) bildet,
**dadurch gekennzeichnet, dass**
die zweite Steuereinheit (42) mindestens eine Steuermembran (44) aufweist, wobei mindestens eine Steuermembran (34) der ersten Steuereinheit (32) und mindestens eine Steuermembran (44) der zweiten Steuereinheit (42) von einer gemeinsamen Membran gebildet sind.

2. Hydrolager (2) nach dem vorhergehenden Anspruch,
wobei die erste Steuereinheit (32) Amplitudenkleinpasscharakter und der Drosselkanal (10) Frequenztiefpasscharakter aufweisen.

3. Hydrolager (2) nach einem der vorhergehenden Ansprüche,
wobei die erste Steuereinheit (32) mindestens eine Steuermembran (34) aufweist.

4. Hydrolager (2) nach dem vorhergehenden Anspruch,
wobei die mindestens eine Steuermembran (34) der ersten Steuereinheit (32) eine progressive Steifigkeitskennlinie aufweist.

5. Hydrolager (2) nach dem vorhergehenden Anspruch,
wobei mindestens zwei Steuermembranen (34) der ersten Steuereinheit (32) unterschiedliche Steifigkeitskennlinien aufweisen.

6. Hydrolager (2) nach einem der vorhergehenden Ansprüche,
wobei die erste Steuereinheit (32) einen Frequenzhochpass- oder Frequenzbandpasscharakter aufweist.

7. Hydrolager (2) nach einem der vorhergehenden Ansprüche,
wobei die Zwischenkammer (22) mit Hydraulikflüssigkeit gefüllt ist.

8. Hydrolager (2) nach einem der vorhergehenden Ansprüche 3 bis 7,
wobei die erste Steuereinheit (32) oder die mindestens eine Steuermembran (34) der ersten Steuereinheit (32) die Arbeitskammer (4) und die Zwischenkammer (22) bis auf einen Ausgleichsspalt (50) voneinander trennt.

9. Hydrolager (2) nach einem der vorhergehenden Ansprüche,
wobei die erste Steuereinheit (32) passiv ausgebildet ist.

10. Hydrolager (2) nach einem der vorhergehenden Ansprüche,
**gekennzeichnet durch** eine Druckkammer (46), wobei die zweite, bewegbare Steuereinheit (42) zwischen der Zwischenkammer (22) und der Druckkammer (46) angeordnet ist und diese beiden Kammer (22, 46) voneinander trennt.

11. Hydrolager (2) nach einem der vorhergehenden Ansprüche,
wobei das Hydrolager (2) einen Aktor (16) aufweist, der zum gesteuerten Bewegen der zweiten Steuereinheit (42) oder der mindestens einen Steuermembran (44) der zweiten Steuereinheit (42) ausgestaltet ist.

12. Hydrolager (2) nach einem der vorhergehenden Ansprüche,
wobei die Zwischenkammer (22) als Steuerkanal zwischen der ersten Steuereinheit (32) und der zweiten Steuereinheit (42) ausgestaltet ist.

13. Hydrolager (2) nach einem der vorhergehenden Ansprüche,
wobei die Arbeitskammer (4) und die Ausgleichskammer (6) in einer Längsrichtung L des Hydrolagers (2) hintereinander angeordnet sind, die Arbeitskammer (4) und die Ausgleichskammer (6) durch eine Trennwand (8) voneinander getrennt sind, und die Druckkammer (46) zu einer von der Trennwand (8) abgewandten Stirnseite der zweiten Steuereinheit (42) angeordnet ist.

14. Hydrolager (2) nach dem vorhergehenden Anspruch,
wobei der Steuerkanal in einem Bereich zwischen der Trennwand (8) und der Druckkammer (46) angeordnet ist.

15. Kraftfahrzeug mit
- einem Fahrzeugrahmen,
- einem Motor und
- einem Motorlager, das eine lagernde Verbindung zwischen dem Motor und dem Fahrzeugrahmen herstellt,
**dadurch gekennzeichnet, dass**
- das Motorlager durch ein Hydrolager (2) nach einem der vorhergehenden Ansprüche 1 bis 14 ausgebildet ist.

## Claims

1. Hydraulic mount (2) having
- a supporting spring (36),
- a working chamber (4) which is at least partially encompassed by the supporting spring (36) and which is filled with a hydraulic liquid,
- a compensation chamber (6), and
- a throttle channel (10) which is formed between the working chamber (4) and the compensation chamber (6) and which serves for the exchange of hydraulic liquid,
- an intermediate chamber (22),
- a first, movable control unit (32) which is arranged between the working chamber (4) and the intermediate chamber (22) and which separates said two chambers (4, 22) from one another, and
- a second movable control unit (42) which forms a wall portion (48) of the intermediate chamber (22),
**characterized in that**
the second control unit (42) has at least one control diaphragm (44), wherein at least one control diaphragm (34) of the first control unit (32) and at least one control diaphragm (44) of the second control unit (42) are formed by one common diaphragm.

2. Hydraulic mount (2) according to the preceding claim,
wherein the first control unit (32) has an amplitude low-pass characteristic and the throttle channel (10) has a frequency low-pass characteristic.

3. Hydraulic mount (2) according to any of the preceding claims,
wherein the first control unit (32) has at least one control diaphragm (34).

4. Hydraulic mount (2) according to the preceding claim,
wherein the at least one control diaphragm (34) of the first control unit (32) has a progressive stiffness characteristic curve.

5. Hydraulic mount (2) according to the preceding claim,
wherein at least two control diaphragms (34) of the first control unit (32) have different stiffness characteristic curves.

6. Hydraulic mount (2) according to any of the preceding claims,
wherein the first control unit (32) has a frequency high-pass or frequency band-pass characteristic.

7. Hydraulic mount (2) according to any of the preceding claims,
wherein the intermediate chamber (22) is filled with hydraulic liquid.

8. Hydraulic mount (2) according to any of the preceding Claims 3 to 7,
wherein the first control unit (32) or the at least one control diaphragm (34) of the first control unit (32) separates the working chamber (4) and the intermediate chamber (22) from one another aside from a compensation gap (50).

9. Hydraulic mount (2) according to any of the preceding claims,
wherein the first control unit (32) is of passive design.

10. Hydraulic mount (2) according to any of the preceding claims,
**characterized by** a pressure chamber (46), wherein the second, movable control unit (42) is arranged between the intermediate chamber (22) and the pressure chamber (46) and separates said two chambers (22, 46) from one another.

11. Hydraulic mount (2) according to any of the preceding claims,
wherein the hydraulic mount (2) has an actuator (16) which is designed for moving the second control unit (42) or the at least one control diaphragm (44) of the second control unit (42) in a controlled fashion.

12. Hydraulic mount (2) according to any of the preceding claims,
wherein the intermediate chamber (22) is designed as a control channel between the first control unit (32) and the second control unit (42).

13. Hydraulic mount (2) according to any of the preceding claims,
wherein the working chamber (4) and the compensation chamber (6) are arranged one behind the other in a longitudinal direction L of the hydraulic mount (2), the working chamber (4) and the compensation chamber (6) are separated from one another by a partition (8), and the pressure chamber (46) is arranged at a face side of the second control unit (42) which is averted from the partition (8).

14. Hydraulic mount (2) according to the preceding claim,
wherein the control channel is arranged in a region between the partition (8) and the pressure chamber (46) .

15. Motor vehicle having
- a vehicle frame,
- an engine, and
- an engine mount which produces a mounting connection between the engine and the vehicle frame,
**characterized in that**
- the engine mount is formed by a hydraulic mount (2) according to any of the preceding Claims 1 to 14.

## Revendications

1. Palier hydraulique (2) comprenant
- un ressort de support (36),
- une chambre de travail (4) entourée au moins en partie par le ressort de support (36), qui est remplie d'un liquide hydraulique,
- une chambre de compensation (6), et
- un canal d'étranglement (10) réalisé entre la chambre de travail (4) et la chambre de compensation (6) pour échanger du liquide hydraulique,
- une chambre intermédiaire (22),
- une première unité de commande déplaçable (32) qui est disposée entre la chambre de travail (4) et la chambre intermédiaire (22) et qui sépare l'une de l'autre ces deux chambres (4, 22), et
- une deuxième unité de commande déplaçable (42) qui forme une portion de paroi (48) de la chambre intermédiaire (22),
**caractérisé en ce que**
la deuxième unité de commande (42) présente au moins une membrane de commande (44), au moins une membrane de commande (34) de la première unité de commande (32) et au moins une membrane de commande (44) de la deuxième unité de commande (42) étant formées par une membrane commune.

2. Palier hydraulique (2) selon la revendication précédente,
dans lequel la première unité de commande (32) présente un caractère de filtre d'amplitude passe-bas limité et le canal d'étranglement (10) présente un caractère de filtre de fréquence passe-bas.

3. Palier hydraulique (2) selon l'une quelconque des revendications précédentes,
dans lequel la première unité de commande (32) présente au moins une membrane de commande (34).

4. Palier hydraulique (2) selon la revendication précédente,
dans lequel l'au moins une membrane de commande (34) de la première unité de commande (32) présente une caractéristique de rigidité progressive.

5. Palier hydraulique (2) selon la revendication précédente,
dans lequel au moins deux membranes de commande (34) de la première unité de commande (32) présentent des caractéristiques de rigidité différentes.

6. Palier hydraulique (2) selon l'une quelconque des revendications précédentes,
dans lequel la première unité de commande (32) présente un caractère de filtre de fréquence passe haut ou passe-bande.

7. Palier hydraulique (2) selon l'une quelconque des revendications précédentes, dans lequel la chambre intermédiaire (22) est remplie de liquide hydraulique.

8. Palier hydraulique (2) selon l'une quelconque des revendications 3 à 7,
dans lequel la première unité de commande (32) ou l'au moins une membrane de commande (34) de la première unité de commande (32) sépare l'une de l'autre la chambre de travail (4) et la chambre intermédiaire (22) à l'exception d'une fente de compensation (50).

9. Palier hydraulique (2) selon l'une quelconque des revendications précédentes,
dans lequel la première unité de commande (32) est réalisée sous forme passive.

10. Palier hydraulique (2) selon l'une quelconque des revendications précédentes,
**caractérisé par** une chambre de pression (46), la deuxième unité de commande déplaçable (42) étant disposée entre la chambre intermédiaire (22) et la chambre de pression (46) et séparant l'une de l'autre ces deux chambres (22, 46).

11. Palier hydraulique (2) selon l'une quelconque des revendications précédentes,
le palier hydraulique (2) présentant un actionneur (16) qui est configuré pour déplacer de manière commandée la deuxième unité de commande (42) ou l'au moins une membrane de commande (44) de la deuxième unité de commande (42).

12. Palier hydraulique (2) selon l'une quelconque des revendications précédentes,
dans lequel la chambre intermédiaire (22) est configurée sous forme de canal de commande entre la première unité de commande (32) et la deuxième unité de commande (42).

13. Palier hydraulique (2) selon l'une quelconque des revendications précédentes,
dans lequel la chambre de travail (4) et la chambre de compensation (6) sont disposées l'une derrière l'autre dans une direction longitudinale L du palier hydraulique (2), la chambre de travail (4) et la chambre de compensation (6) sont séparées l'une de l'autre par une paroi de séparation (8) et la chambre de pression (46) est disposée vers un côté frontal de la deuxième unité de commande (42) opposé à la paroi de séparation (8) .

14. Palier hydraulique (2) selon la revendication précédente,
dans lequel le canal de commande est disposé dans une région entre la paroi de séparation (8) et la chambre de pression (46).

15. Véhicule automobile comprenant
- un châssis de véhicule,
- un moteur et
- un palier de moteur qui établit une liaison de support entre le moteur et le châssis de véhicule,
**caractérisé en ce que**
- le palier de moteur est réalisé par un palier hydraulique (2) selon l'une quelconque des revendications précédentes 1 à 14.
